# EUROPEAN PATENT SPECIFICATION

(11) **EP 1 912 217 B1**
(45) Date of publication and mention of the grant of the patent: **28.07.2010**
(21) Application number: 06021132.3
(22) Date of filing: 09.10.2006
(51) Int. Cl.: G11B 17/04

(54) **Data carrier guidance system**
Datenträgerführungsanordnung
Système de guidage de support d'information

(43) Date of publication of application: 16.04.2008
(73) Proprietor: Harman Becker Automotive Systems GmbH, 76307 Karlsbad (DE)
(72) Inventor: Naas, Nico, 76139 Karlsruhe (DE)
(74) Representative: Bertsch, Florian Oliver

(56) References cited:
- EP-A1- 1 378 901
- DE-A- 19 728 705
- US-A1- 2004 071 071
- US-A1- 2005 066 344
- US-A1- 2005 138 651

## Description

This invention relates to a guidance for guiding a movement of a data carrier and to a method for manufacturing the guidance by injection molding.

Data carriers such as compact discs or DVDs are widely used and are inserted into a read/write unit for reading the data from the data carrier or for writing data onto the data carrier. Especially when data carriers such as a CD-ROM or DVD is used in a vehicle the data carrier is often inserted through an insertion slot guiding the movement of the data carrier, the data carrier carrying either music data or carrying map data for a navigation system etc. These guidances are often injection-molded parts.

Injection molding is a manufacturing technique for making parts from thermoplastic materials. Molten plastic is injected at a high pressure into a mold, which is the inverse of the desired shape. Injection molding is very widely used for manufacturing a variety of parts. It is a common production method for mass products.

Considerable thought is put into the design of molded parts and their molds to ensure that parts will not be trapped in the mold, that the mold can be completely filled before the molten resin solidifies, to compensate for material shrinkage, and to minimize imperfections in the parts. Molds separate into at least two halves, called the core and the cavity, to permit the part to be extracted. According to an important aspect of injection molding the shape of a molded part must be such that it will not be locked onto the mold. For example sides of objects typically cannot be parallel in the direction of draw, i.e. the direction in which the core and the cavity will separate from each other. Conventionally, a guidance manufactured by injection molding is a one-piece element, the guidance being removed from the mold substantially parallel to the moving direction of the data carrier. Typically, the guidance comprises two guiding surfaces guiding the movement of the data carrier. In case the data carrier is a disk-shaped data carrier, the guidance mainly comprises two opposed guiding surfaces guiding the movement of the data carrier substantially parallel to the guiding surfaces. When the guiding is a one-piece element which is removed from the mold in a direction substantially parallel to the guiding surfaces, the guiding surfaces necessarily comprise a burr from the molding process. The burr results from the molding process, especially the burr originates when the two molding halves meet. It is possible that the data carrier moving along the guiding surfaces get caught on the guiding surfaces because of the burr.

US 2005/0138651 A1 discloses a slot-in for an optical reading medium reading data from an optical storage medium comprising a guiding mechanism with a roller, a base plate and a guiding protrusion at the front end.

US 2004/0071071 A1 discloses a vehicle-mounted display comprising a guiding with a guiding mechanism having an upper surface with a guiding element. On the lower end of the guiding a role is provided in connection with a guiding surface.

EP 1 378 901 discloses a disk recording device in which a disk-like recording medium is transported between a disk loading portion and a disk unloading portion.

DE 19728705 A1 discloses a guidance according to the preamble of claim 1.

Accordingly, a need exists to provide a guidance for guiding the movement of a data carrier in which the existence of a burr on the guiding surfaces can be avoided and which is still easy to produce.

This need is met by the features of independent claims 1. In the dependent claims preferred embodiments of the invention are described.

According to a first aspect of the invention a guidance is provided for guiding the movement of a data carrier, the guidance comprising a first guiding surface providing guidance to a first surface of a data carrier, the guidance further comprising a second guiding surface providing guidance to a second guiding surface of the data carrier. According to the invention the guiding comprises at least two different parts, a first part comprising the first guiding surface and a second part comprising the second guiding surface. According to this aspect of the invention the guiding is a two-piece element, the two-piece construction having the advantage that a burr on the guiding surfaces can be avoided. Due to the fact that the burr can be avoided on the guiding surfaces, the data carrier can freely move along the guiding surfaces without the risk of getting caught. As will be discussed below the fact that the guidance comprises at least two different separated parts has the advantage that many different forms of guiding surfaces can be easily manufactured, which would not be possible if the guidance were a one-piece element. The fact that the guidance is a two-piece element allows a manufacturing method in which a burr can be avoided on the guiding surfaces, as it is not necessary to remove the guidance from the mold parallel to the guiding surfaces.

According to one aspect of the invention the two parts of the guidance are connected to each other and then form the guidance of the ejection or insertion opening of the read/write unit of the data carrier. When the first part of the guidance is connected to the second part, a complete guidance is obtained corresponding to a one-piece guidance.

According to the invention, the form or shape of the first part of the guidance substantially corresponds to the form or shape of the second part. In one aspect of the invention the first and the second part are completely identical, so that the manufacturing process of the guidance is simplified. The two parts of the guidance can be connected to each other at their outer ends resulting in the finalized guidance. Even if another manufacturing step is necessary by connecting the two parts of the guidance, the deflashing, i.e. removing of the burr, is not necessary with the two-piece guidance of the invention.

When the data carrier is a disk-shaped data carrier, each guiding surface or each part of the guidance guides the movement of one of the main surfaces of the data carrier. In this embodiment the two guiding surfaces are arranged in an opposed relation. The two connecting ends of the two parts build a stop, so that the movement of the data carrier in a direction parallel to the guiding surface is also restricted.

According to the invention each part of the two-part guidance comprises a main surface corresponding to the guiding surface, the part further comprising two connecting ends extending from both ends of the main surface. Each part of the guidance may furthermore comprise a front surface substantially perpendicular to the guiding surface, the front surface comprising means for fixing the guidance to a support structure in which the guidance is arranged. By way of example the support structure may be part of a housing in which the read/write unit for the data carrier is installed, the guidance guiding the movement from outside the housing to the read/write unit inside the housing.

The two-part guidance structure has the further advantage that it is possible to design each part of the guidance in such a way that the width of the guiding surface is substantially equal in a direction perpendicular to the moving direction of the data carrier. In a conventionally used one-piece guidance the provision of guiding surfaces having a constant width was a difficult task in view of the molding process and in view of the removing of the molded part from the mold. The two-part guidance furthermore has the advantage that it is possible to have a variety of shapes for the guiding surface, which was not possible with a one-piece guidance. By way of example it is possible to provide a guiding surface which in the moving direction of the data carrier comprises a first section with an ascending slope followed by a second section with a descending slope. In addition, these different shapes of the guidance are possible without the existence of a burr on the guiding surfaces.

Further objects, features and advantages of the invention will become apparent to the skilled person in the course of the following description referring to the accompanying drawings.
Fig. 1 is a perspective view of the two parts of the guidance in a separated state,
Fig. 2 is a back view of the guidance connected to a housing, and
Fig. 3 is a cut-away perspective view of the guidance inserted into a housing.

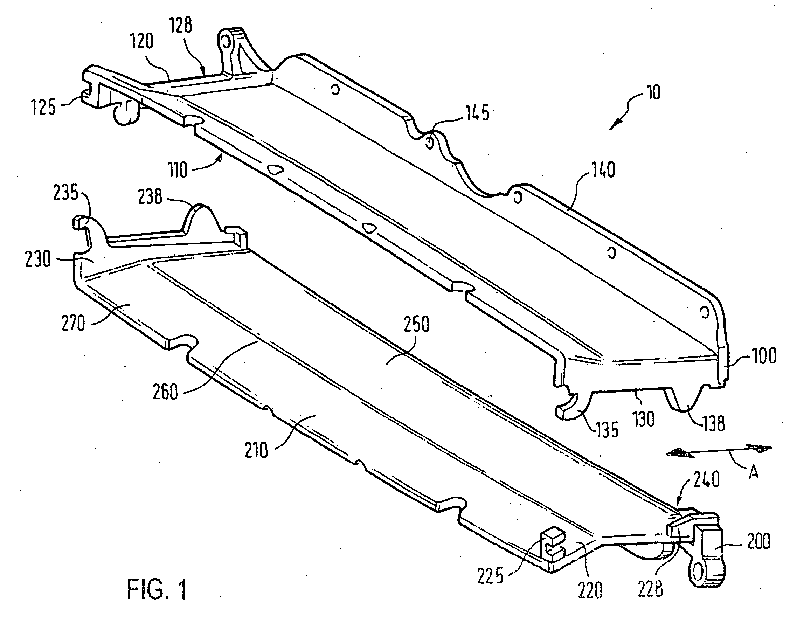

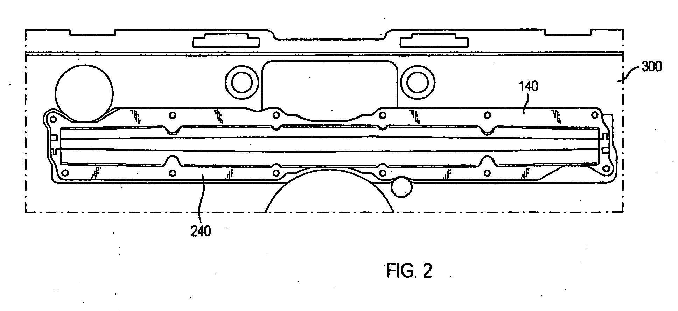

The guidance 10 shown in Fig. 1 comprises a first part 100 and a second part 200. In the embodiment shown the two parts 100 and 200 are identical. The two parts 100 and 200 can be coupled to each other in such a way that the two guiding surfaces are facing each other, the two facing guiding surfaces building an insertion slit or opening for inserting or removing a data carrier (not shown). In the embodiment shown in Fig. 1 the moving direction of the data carrier is indicated by the flash A. Each part comprises a main surface which might be slightly curved and which is the guiding surface 110, 210. From both ends of the guiding surfaces 110, 210 connecting end surfaces 220, 230 for the part 200 and connecting end surfaces 120 and 130 for the part 100 are provided. The two parts are coupled to each other in such a way that the end surface 130 is connected to the end surface 220 and that the end surface 120 is connected to the end surface 230. The surfaces 130 and 230 comprise first coupling elements 135, 235 and 138, 238 coupling to corresponding second coupling elements 125, 225 and 128, 228. Each part (100, 200) further comprises a front surface 140, 240 extending substantially perpendicular to the guiding surfaces 110, 210. The front surfaces can be used for fixing the connected guidance to a support structure as shown in further detail in Fig. 2.

In the front surfaces 140, 240 openings 145 are provided in which connecting pins of a support structure such as a housing are inserted as can be seen in Fig. 2, for connecting the guidance to a housing.

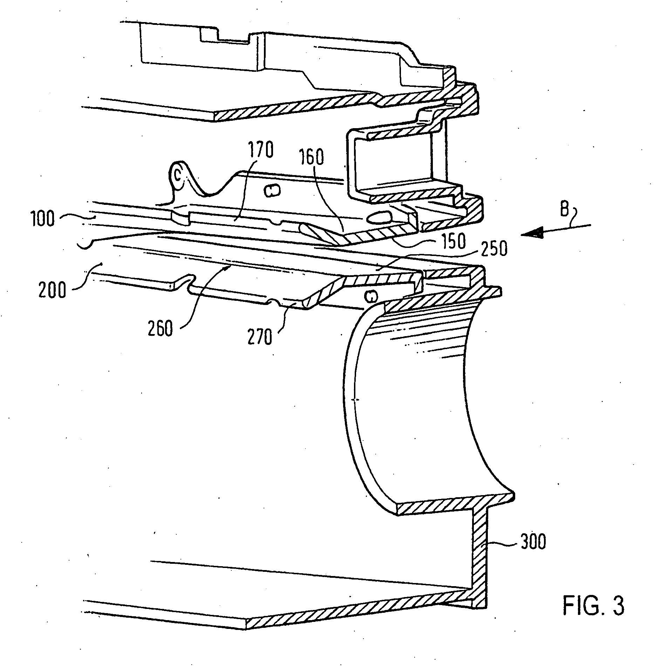

In Fig. 2 the guidance is shown in a coupled state, the first part 100 being coupled to the second part 200, the guidance itself being connected to a housing 300. In the embodiment shown in Fig. 2 the housing is shown from behind, so that when a data carrier is inserted into the guidance the data carrier comes out of the plane of projection. Also making reference to Fig. 3 the guidance is shown connected to the housing 300 in a cut-away section. As can be seen the housing comprises an opening in which the data carrier (not shown) can be inserted, the further movement of the data carrier being guided by the first part 100 and the second part 200 of the guidance. As can be deduced from Figs. 1 and 3 the guiding surface comprises, seen from the insertion direction of the data carrier shown by flash B in Fig. 3, a first section 150 and 250 of an ascending slope followed by a peak 260 where the relative distance between the first part of the guidance and the second part of the guidance is minimized. The peak 260 is facing the peak 160 of the other part 100. In the insertion direction shown by flash B in Fig. 3 a second section of the guiding surface follows having a descending slope. As can be seen in Figs. 1 and 3 the second section 270, 170 is shorter in the moving direction of the data carrier than the first section 150, 250. As can be seen from Fig. 3 the width of the guidance along the guiding surfaces is constant.

The guidance of this invention provides guiding surfaces without the existence of burrs. Furthermore, the forms of the guiding surfaces can be varied, and it is possible to provide a guidance having a conical shape, which would not be possible in the case of a one-piece guidance. Summarizing, the two-piece guidance provides several advantages over the conventional one-piece guidance.

## Claims

1. Guidance for guiding a movement of a data carrier providing guidance for the insertion or ejection opening of a read/write unit, comprising:
- a first guiding surface (110) providing guidance to a first surface of the data carrier,
- a second guiding surface (210) providing guidance to a second surface of the data carrier,
wherein the guidance comprises two different parts (100, 200), a first part (100) comprising the first guiding surface (110) and a second part (200) comprising the second guiding surface (210), the form of the first part (100) substantially corresponding to the form of the second part (200), **characterized in that** each part of the guidance comprises a main surface corresponding to the guiding surface (110, 210), two connecting ends (120, 130, 220, 230) extending from both ends of the main surface, each part further comprising a front surface (140, 240) substantially perpendicular to the guiding surface, the front surface comprising means for fixing the guidance to a support structure in which the guidance is arranged.

2. Guidance according to claim 1, **characterized in that** the two parts (100, 200) of the guidance, upon connection, form a guidance of an ejection or insertion opening of a read/write unit of the data carrier.

3. Guidance according to any of the preceding claims, **characterized in that** two parts (100, 200) of the guidance are connected to each other at their outer ends.

4. Guidance according to any of the preceding claims, **characterized in that** the guidance is a guidance for a disk-shaped data carrier, each guiding surface (110, 210) of a guiding part guiding one of the main surfaces of the disk-shaped data carrier.

5. Guidance according to any of the preceding claims, **characterized in that** each part of the guidance comprises, in the moving direction of the data carrier, a first section (250) with an ascending slope and a second section (270) with a descending slope.

## Patentansprüche

1. Führung zum Führen einer Bewegung eines Datenträgers, welche eine Führung für die Einsetz- oder Auswurföffnung einer Lese-/Schreibeinheit bereitstellt, umfassend:
- eine erste Führungsfläche (110), welche eine Führung für eine erste Fläche des Datenträgers bereitstellt,
- eine zweite Führungsfläche (210), welche eine Führung für eine zweite Fläche des Datenträgers bereitstellt,
wobei die Führung zwei unterschiedliche Teile (100, 200) umfasst, wobei ein erstes Teil (100) die erste Führungsfläche (110) umfasst und ein zweites Teil (200) die zweite Führungsfläche (210) umfasst, wobei die Form des ersten Teils (100) im Wesentlichen der Form des zweiten Teils (200) entspricht, **dadurch gekennzeichnet, dass** jedes Teil der Führung eine Hauptfläche umfasst, welche der Führungsfläche (110, 210) entspricht, wobei sich zwei Verbindungsenden (120, 130, 220, 230) von beiden Enden der Hauptfläche erstrecken, wobei jedes Teil ferner eine Vorderfläche (140, 240) im Wesentlichen senkrecht zu der Führungsfläche umfasst, wobei die Vorderfläche Mittel zum Befestigen der Führung an einer Haltestruktur, in welcher die Führung angeordnet ist, umfasst.

2. Führung nach Anspruch 1, **dadurch gekennzeichnet, dass** die zwei Teile (100, 200) der Führung nach einer Verbindung eine Führung einer Auswurf- oder Einsetzöffnung einer Lese-/Schreibeinheit des Datenträgers bilden.

3. Führung nach einem der vorhergehenden Ansprüche, **dadurch gekennzeichnet, dass** zwei Teile (100, 200) der Führung an ihren äußeren Enden miteinander verbunden sind.

4. Führung nach einem der vorhergehenden Ansprüche, **dadurch gekennzeichnet, dass** die Führung eine Führung für einen scheibenförmigen Datenträger ist, wobei jede Führungsfläche (110, 210) eines Führungsteils eine der Hauptflächen des scheibenförmigen Datenträgers führt.

5. Führung nach einem der vorhergehenden Ansprüche, **dadurch gekennzeichnet, dass** jedes Teil der Führung in der Bewegungsrichtung des Datenträgers einen ersten Abschnitt (250) mit einer ansteigenden Neigung und einen zweiten Abschnitt (270) mit einer absteigenden Neigung umfasst.

## Revendications

1. Dispositif de guidage pour guider un déplacement d'un support de données, fournissant un moyen de guidage pour l'orifice d'insertion ou d'éjection d'une unité de lecture/écriture, comprenant:
- une première surface de guidage (110) fournissant un moyen de guidage pour une première surface du support de données,
- une deuxième surface de guidage (210) fournissant un moyen de guidage pour une deuxième surface du support de données,
dans lequel le dispositif de guidage comprend deux composants distincts (100, 200), un premier composant (100) comprenant la première surface de guidage (110), et un deuxième composant (200) comprenant la deuxième surface de guidage (210), la forme du premier composant (100) correspondant essentiellement à la forme du deuxième composant (200), **caractérisé en ce que** chaque composant du dispositif de guidage comprend une surface principale correspondant à la surface de guidage (110, 210), deux extrémités de raccordement (120, 130, 220, 230) s'étendant à partir des deux extrémités de la surface principale, chaque composant comprenant en outre une surface frontale (140, 240) essentiellement perpendiculaire à la surface de guidage, la surface frontale comprenant des moyens pour fixer le dispositif de guidage sur une structure de support dans laquelle le dispositif de guidage est disposé.

2. Dispositif de guidage selon la revendication 1, **caractérisé en ce que** les deux composants (100, 200) du dispositif de guidage forment, après raccordement, un moyen de guidage d'un orifice d'éjection ou d'insertion d'une unité de lecture/écriture du support de données.

3. Dispositif de guidage selon l'une quelconque des revendications précédentes, **caractérisé en ce que** deux composants (100, 200) du dispositif de guidage sont raccordés l'un à l'autre à leurs extrémités extérieures.

4. Dispositif de guidage selon l'une quelconque des revendications précédentes, **caractérisé en ce que** le dispositif de guidage est un dispositif de guidage pour un support de données en forme de disque, chaque surface de guidage (110, 210) d'un composant de guidage guidant l'une des surfaces principales du support de données en forme de disque.

5. Dispositif de guidage selon l'une quelconque des revendications précédentes, **caractérisé en ce que** chaque composant du dispositif de guidage comprend, dans la direction de déplacement du support de données, une première section (250) ayant une pente ascendante et une deuxième section (270) ayant une pente descendante.
